# EUROPEAN PATENT SPECIFICATION

(11) **EP 3 595 340 B1**
(45) Date of publication and mention of the grant of the patent: **19.05.2021**
(21) Application number: 19181489.6
(22) Date of filing: 20.06.2019
(51) Int. Cl.: H04W 4/80, H04W 12/08, G06F 21/60, H04W 12/06

(54) **IMAGE FORMING APPARATUS AND COMMUNICATION MODE SETTING METHOD**
BILDERZEUGUNGSVORRICHTUNG UND KOMMUNIKATIONSMODUSEINSTELLVERFAHREN
APPAREIL DE FORMATION D'IMAGES ET PROCÉDÉ DE RÉGLAGE DE MODE DE COMMUNICATION

(30) Priority: 12.07.2018 US 201816033420
(43) Date of publication of application: 15.01.2020
(73) Proprietor: Toshiba Tec Kabushiki Kaisha, 141-8562 Tokyo (JP)
(72) Inventor: ODAGIRI, Hiroshi, Shinagawa-ku, Tokyo 141-8562 (JP)
(74) Representative: Bandpay & Greuter

(56) References cited:
- EP-A1- 2 699 025
- JP-A- 2017 105 015
- US-A1- 2017 192 723
- US-A1- 2018 096 123

## Description

### FIELD

The present invention relates to the field of MFP (Multi-Function Peripheral) technologies in general, and embodiments described herein relate more particularly to an information processing apparatus, an image forming apparatus and a communication mode setting method.

### BACKGROUND

A MFP (Multi-Function Peripheral) is connected to a portable terminal such as a smartphone and a tablet using various wireless communication systems. A wireless communication system such as a wireless LAN (Local Area Network) or a Bluetooth® Technology is provided as a typical example. If these wireless communication systems are used, a complicated process is needed for the MFP to connect with the portable terminal. For example, the MFP searches for the portable terminal existing around the MFP. Next, the MFP specifies a portable terminal to which the MFP is connected. Next, the MFP executes a communication setting for connecting with the specified portable terminal.

In recent years, the number of devices that perform communication using non-contact communication such as a NFC (Near Field Communication) or the like is increasing. The device that performs the communication using the NFC specifies another device by simply touching another device and executes communication setting for connecting with the specified device. In the NFC, a plurality of communication modes for communication is prescribed. Generally, in order to perform two-way communication of data between devices, a user needs to perform a switching operation from a reader/writer mode used for card authentication to a P2P mode or the like. JP 2017105015 A discloses an image forming apparatus capable of exclusively executing via NFC a first mode (reader/writer mode) in which information is read/written to/from an external device and a second mode (card emulation mode) in which information is read/written from the external device. The image forming apparatus includes: a reading section which reads information required for logging in the image forming apparatus from the external device during the execution of the first mode; an authentication section which permits or rejects the log-in on the basis of the information required for the log-in; and a mode switching section which switches from the first mode to the second mode when the authentication section permits the log-in. US 2017/192723 A1 discloses a mobile terminal connecting to a multifunction peripheral over NFC. Different access rights/authority is given to each user depending on whether they are administrator or general user.

From the viewpoint of convenience of the NFC, the number of the MFPs having an interface for communicating with the portable terminal using the NFC is increasing. On the other hand, in order to omit the switching operation of the communication mode, such a MFP has separate hardware by separating an interface used for the card authentication from an interface used for communication with the portable terminal.

However, such a MFP has to prepare a plurality of hardware as interfaces for the same NFC. Therefore, the MFP becomes expensive.

To solve such problems, there is provided an information processing apparatus, comprising:
a communication section configured to communicate with a terminal using a near field wireless communication; and
a processor configured to set a first communication mode to be used for authentication of the terminal as a communication mode of the communication section, and change the communication mode from the first communication mode to a second communication mode different from the first communication mode in response to success in the authentication of the terminal,
characterized in that
the first communication mode is a reader/writer mode, and the second communication mode is either a card emulation mode or a P2P mode,
the information processing apparatus further comprises a storage section configured to store data in which the identification information used for the authentication and information indicating an authority assigned to a user identified by the identification information, and
the processor sets either the card emulation mode or the P2P mode as the second communication mode according to the authority.

Preferred embodiments are defined in dependent claims.

The invention also concerns a communication mode setting method of an information processing apparatus, comprising following steps performed by a processor of the information processing apparatus:
setting a first communication mode to be used for authentication of a terminal as a communication mode of a communication section of the information processing apparatus for communicating with the terminal using a near filed wireless communication; and
changing the communication mode from the first communication mode to a second communication mode different from the first communication mode in response to success in the authentication of the terminal,
characterized in that
the first communication mode is a reader/writer mode, and the second communication mode is either a card emulation mode or a P2P mode, and
the method further comprises steps of:
   storing data in a storage section of the information processing apparatus in which the identification information used for the authentication and information indicating an authority assigned to a user identified by the identification information, and
   setting either the card emulation mode or the P2P mode as the second communication mode according to the authority.

The invention is disclosed in the appended claims.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating an example of a configuration of an image forming apparatus according to an embodiment;
Fig. 2 is a diagram illustrating an example of a configuration of a user management table stored in the image forming apparatus according to the embodiment; and
Fig. 3 is a flowchart for depicting a communication mode setting operation by the image forming apparatus according to the embodiment.

### DETAILED DESCRIPTION

In accordance with an embodiment, an image forming apparatus (or an information processing apparatus) comprises a communication section configured to communicate with a terminal using a near field wireless communication; and a processor configured to set a first communication mode to be used for authentication of the terminal as a communication mode of a communication section, and change the communication mode from the first communication mode to a second communication mode different from the first communication mode in response to the success in the authentication of the terminal.

Hereinafter, an embodiment will be described with reference to the accompanying drawings.

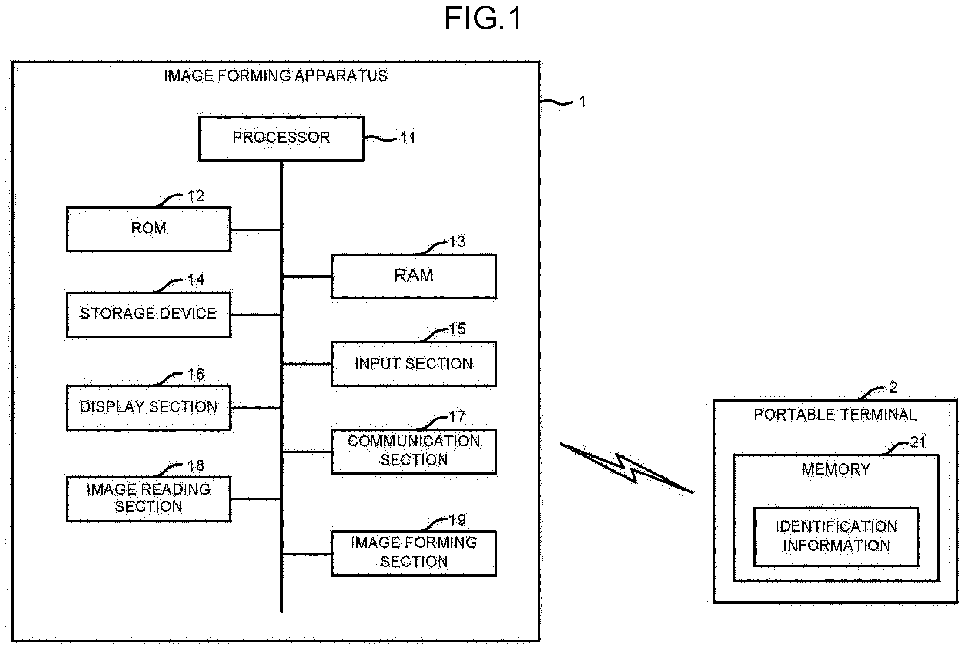

Fig. 1 is a block diagram illustrating an example of a configuration of an image forming apparatus 1. For example, the image forming apparatus 1 is a MFP. The image forming apparatus 1 includes a processor 11, a ROM (Read Only Memory) 12, a RAM (Random Access Memory) 13, a storage device 14, an input section 15, a display section 16, a communication section 17, an image reading section 18 and an image forming section 19.

The processor 11 executes various processes. For example, the processor 11 is a CPU (Central Processing Unit). The processor 11 executes various processes by executing programs stored in the ROM 12 or the storage device 14.

The ROM 12 stores programs for the processor 11 to execute various processes or control data. The ROM 12 is an example of a storage section. The RAM 13 is a working memory.

The storage device 14 is a rewritable nonvolatile memory. For example, the storage device 14 is a SSD (Solid State Drive) or a HDD (Hard Disk Drive). The storage device 14 stores the programs for the processor 11 to execute various processes and the control data. Furthermore, the storage device 14 stores data collected in various processes by the processor 11. Furthermore, the storage device 14 stores the data of a user management table. The user management table manages a portable terminal 2 which enables a non-contact communication using the NFC in the image forming apparatus 1. The NFC is an example of a near field wireless communication standard. The portable terminal 2 is a smart phone, a tablet or the like that can perform communication using the NFC. A typical example of the user management table is described later. The storage device 14 is an example of the storage section.

The input section 15 receives an input by a user. For example, the input section 15 is a keyboard or a touch pad stacked on the display section 16 described below.

The display section 16 displays various information. For example, the display section 16 is a liquid crystal display.

The communication section 17 is used for performing the non-contact communication with the portable terminal 2 using the NFC. The communication section 17 communicates with the portable terminal 2 in a communication mode which is any one of a reader/writer mode, a card emulation mode and a P2P mode. The reader/writer mode is a mode for reading data or writing data. The card emulation mode is a mode for executing behavior as a non-contact IC card. The P2P mode is a mode for executing two-way communication of data.

If the communication mode of the image forming apparatus 1 is the reader/writer mode, the portable terminal 2 operates in the card emulation mode. Thus, the image forming apparatus 1 reads and writes data from and to the portable terminal 2. For example, the image forming apparatus 1 reads identification information from a memory 21 of the portable terminal 2. The identification information is uniquely assigned to the portable terminal 2. For example, the identification information corresponds to a user ID for identifying a user who has the portable terminal 2. If the communication mode of the image forming apparatus 1 is card emulation mode, the portable terminal 2 operates in reader/writer mode. As a result, the portable terminal 2 reads and writes data from and to the image forming apparatus 1. If the communication mode of the image forming apparatus 1 is the P2P mode, the portable terminal 2 operates in the P2P mode. Thus, the image forming apparatus 1 performs the two-way communication of the data with the portable terminal 2.

The communication mode of the communication section 17 is set and changed by the processor 11. The communication mode of the communication section 17 is normally set to the reader/writer mode used for authenticating the portable terminal 2. Below, the first communication mode refers to the reader/writer mode. A second communication mode is different from the first communication mode, and refers to either the card emulation mode or the P2P mode.

The image reading section 18 is a scanner that reads a document to acquire image data from the document. For example, the image reading section 18 includes an image sensor. An image sensor is an image capturing element in which pixels for converting light to an electrical signal (image signal) are arranged linearly. The image sensor is, for example, a CCD (Charge Coupled Device), a CMOS (Complementary Metal Oxide Semiconductor), or another image capturing element.

The image forming section 19 is a printer for forming an image on a printing medium. For example, the image forming section 19 includes a photoconductive drum, an electrostatic charger, an exposure device and a developing device. The surface of the photoconductive drum is uniformly charged by the electrostatic charger. The exposure device emits light having a wavelength capable of forming a latent image on the charged photoconductive drum in response to an electric signal of document data or image data to form an electrostatic latent image on the charged photoconductive drum. The developing device attaches toner (developer) to the electrostatic latent image formed on the photoconductive drum to form a toner image on the surface of the photoconductive drum. The image forming section 19 transfers the toner image formed on the surface of the photoconductive drum onto the printing medium and fixes the toner image on the printing medium, thereby forming an image on the printing medium.

Next, the user management table stored by the storage device 14 is described.

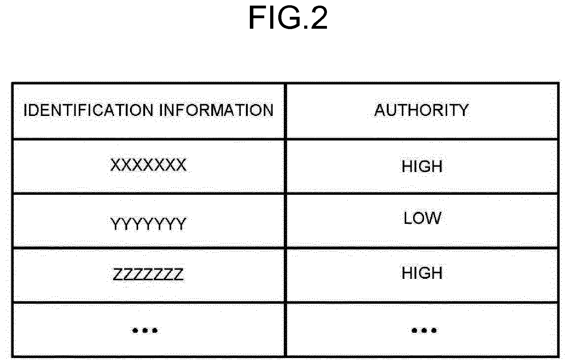

Fig. 2 is a diagram illustrating a configuration of the user management table. The storage device 14 stores data in the user management table in which the identification information is associated with information indicating authority. The identification information is used for authentication of the portable terminal 2. For example, the identification information corresponds to a user ID for identifying a user who has the portable terminal 2. The authority is assigned to the user corresponding to the identification information. The authority relates to the use of the image forming apparatus 1 assigned to a user. The higher the authority is, the higher the degree of freedom relating to the use of the image forming apparatus 1 the user has. For example, the authority is in two stages, "high" and "low". The authority set to "high" is associated with the P2P mode, which has a higher degree of freedom than the card emulation mode, regarding the use of the image forming apparatus 1. The user can perform the two-way communication of the data with the image forming apparatus 1 using the portable terminal 2. For example, the user can change an operation setting of the image forming apparatus 1 and change various settings such as an address book. The authority set to "low" is associated with the card emulation mode having a lower degree of freedom than the P2P mode regarding the use of the image forming apparatus 1. The user can read and write data from and to the image forming apparatus 1 using the portable terminal 2. The authority is not limited to having two stages, "high" and "low". The authority may be in three or more stages. In this case, each authority is also associated with either the P2P mode or the card emulation mode.

Next, the operation of setting the communication mode by the image forming apparatus 1 is described.

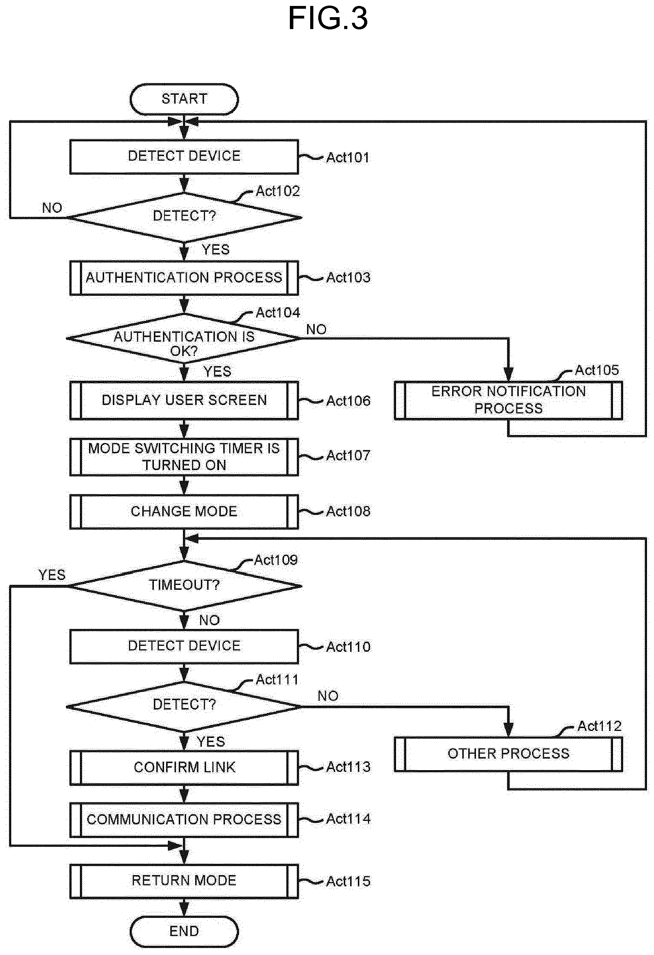

Fig. 3 is a flowchart for depicting the operation of setting the communication mode by the image forming apparatus 1. Changes such as replacing processing order, deleting a part of processes or the like can be made as appropriate. Here, the processor 11 sets the first communication mode used for authentication of the portable terminal 2 as the communication mode of the communication section 17.

The processor 11 detects the portable terminal 2 which is communicable using the NFC (Act 101). In Act 101, the processor 11 detects the portable terminal 2 present within a detection range of the communication section 17 conforming to the communication standard of the NFC. The processor 11 determines whether the portable terminal 2 is detected or not (Act 102). In Act 102, the processor 11 determines the detection or non-detection of the portable terminal 2 depending on whether the portable terminal 2 is present within the detection range of the communication section 17. If the processor 11 determines that the portable terminal 2 is not detected (No in Act 102), the processor 11 returns to the process in Act 101 and continues to detect the portable terminal 2.

If the processor 11 determines that the portable terminal 2 is detected (Yes in Act 102), the processor 11 executes an authentication process (Act 103). In Act 103, the processor 11 acquires the identification information from the portable terminal 2 via the communication section 17. At this time, the processor 11 operates in the reader/writer mode which is a first communication mode. The portable terminal 2 operates in the card emulation mode. The processor 11 compares the identification information acquired from the portable terminal 2 with the identification information managed in the user management table. The processor 11 determines whether or not the authentication is successful depending on whether the identification information acquired from the portable terminal 2 exists in the user management table. Instead of the identification information acquired from the portable terminal 2, the processor 11 may execute the authentication process using the identification information input by the user through the input section 15. The user may input a user name and a password, or biometric information as the identification information with the input section 15. For example, the biometric information is a fingerprint or the like, but it is not limited thereto.

The processor 11 determines whether or not the authentication process of the portable terminal 2 is successful (Act 104). If the authentication process of the portable terminal 2 fails (No in Act 104), the processor 11 executes an error notification process (Act 105). In Act 105, the processor 11 displays a message indicating that authentication fails on the display section 16. Instead, the processor 11 may output a message indicating that the authentication fails through a voice from a speaker (not shown). If the authentication process of the portable terminal 2 is successful (Yes in Act 104), the processor 11 displays a user screen on the display section 16. The user screen is assigned to a user identified by the identification information which is successfully authenticated. The user can input various settings on the user screen.

The processor 11 starts a mode switching timer (Act 107). The mode switching timer is used for counting a predetermined period of time after successful authentication. In Act 107, the processor 11 starts counting a predetermined period of time based on successful authentication of the portable terminal 2. The predetermined period of time is a period in which the communication mode is maintained at the second communication mode. A length of the predetermined period of time can be arbitrarily set. The storage device 14 stores information indicating the predetermined period of time.

The processor 11 changes the communication mode (Act 108). In Act 108, the processor 11 changes the communication mode from the first communication mode to the second communication mode different from the first communication mode based on the successful authentication of the portable terminal 2. The second communication mode may be either the card emulation mode or the P2P mode.

The processor 11 determines whether or not timeout occurs (Act 109). In Act 109, the processor 11 determines that the timeout does not occur before the elapse of the predetermined period of time. On the other hand, the processor 11 determines that the timeout occurs based on the elapse of the predetermined period of time. If it is determined that the timeout does not occur (No in Act 109), the processor 11 detects the portable terminal 2 (Act 110). In Act 110, the processor 11 detects the portable terminal 2 that is communicable using the NFC which is present within the detection range of the communication section 17 conforming to the communication standard of the NFC.

The processor 11 determines whether the portable terminal 2 is detected or not detected (Act 111). In Act 111, the processor 11 determines whether the portable terminal 2 is detected or not detected depending on whether the portable terminal 2 is present within the detection range of the communication section 17. If it is determined that the processor 11 does not detect the portable terminal 2 (No in Act 111), the processor 11 executes another process (Act 112). For example, another process refers to a process relating to a normal function of the image forming apparatus 1 such as a copy process based on an operation by the user.

If it is determined that the processor 11 detects the portable terminal 2 (Yes in Act 111), the processor 11 establishes a link between the portable terminal 2 and the image forming apparatus 1 (Act 113). In Act 113, the processor 11 establishes the link between the portable terminal 2 and the image forming apparatus 1 conforming to the communication standard of the NFC. The processor 11 executes the communication process between the portable terminal 2 and the image forming apparatus 1 (Act 114). In Act 114, the processor 11 executes the communication process according to the communication mode of the communication section 17. If the communication mode of the communication section 17 is the card emulation mode, the processor 11 executes the communication process with the portable terminal 2 according to the card emulation mode. If the communication mode of the communication section 17 is the P2P mode, the processor 11 performs the communication process (data exchange) with the portable terminal 2 according to the P2P mode. Further, in Act 114, the processor 11 detects a state of the communication process between the portable terminal 2 and the image forming apparatus 1 during counting of the predetermined period of time. For example, the processor 11 detects the start, the execution, and the completion of the communication process as the state of communication process.

The processor 11 switches the communication mode to the first communication mode based on the detection of the completion of the communication process between the portable terminal 2 and the image forming apparatus 1 (Act 115). In Act 115, the processor 11 changes the communication mode from the second communication mode to the first communication mode before the elapse of the predetermined period of time based on the detection of the completion of the communication process between the portable terminal 2 and the image forming apparatus 1.

Returning to Act 109, if it is determined that the timeout occurs (Yes in Act 109), the processor 11 switches the communication mode to the first communication mode (Act 115). In Act 115, the processor 11 changes the communication mode from the second communication mode to the first communication mode based on the detection of elapse of the predetermined period of time.

In Act 108, the processor 11 may set either the card emulation mode or the P2P mode as the second communication mode according to the authority. In this example, the processor 11 extracts the authority associated with the identification information which is successfully authenticated from the user management table. The processor 11 determines whether the communication mode associated with the extracted authority is the card emulation mode or the P2P mode. Accordingly, the processor 11 can set either the card emulation mode or the P2P mode as the second communication mode according to the extracted authority.

In Act 113, the processor 11 may detect the state of the link between the portable terminal 2 and the image forming apparatus 1 during counting of the predetermined period of time. In this example, the processor 11 detects connection or disconnection as the state of the link. If the portable terminal 2 moves out of the detection range of the communication section 17, the processor 11 detects disconnection of the link. The processor 11 changes the communication mode from the second communication mode to the first communication mode before the elapse of the predetermined period of time based on the detection of disconnection of the link between the portable terminal 2 and the image forming apparatus 1.

The processor 11 may detect the presence or absence of a logout instruction during counting of the predetermined period of time after Act 107. In this example, the processor 11 changes the communication mode from the second communication mode to the first communication mode before the elapse of the predetermined period of time based on the detection of the logout instruction. The logout instruction is input by the user through the input section 15. The logout instruction is an instruction to cancel the successfully authenticated state.

According to the embodiment, the processor 11 changes the communication mode from the first communication mode to the second communication mode different from the first communication mode based on the successful authentication of the portable terminal 2. As a result, the user can omit a job of changing the communication mode of the communication section 17 with the input section 15 after successful authentication. The user can continue the desired work without causing inconvenience if the job is performed in the image forming apparatus 1 using the portable terminal 2 through the NFC. The user can continue the desired job without causing inconvenience even if the job is performed in the image forming apparatus 1 without using the portable terminal 2.

According to the embodiment, the processor 11 starts counting of the predetermined period of time during which the communication mode is maintained at the second communication mode based on successful authentication of the portable terminal 2. Thus, the image forming apparatus 1 can prevent the inconvenience that the communication mode is continuously set to the second communication mode. The user can bring the portable terminal 2 close to the communication section 17 after the predetermined period of time elapses to perform the authentication again without requiring the job of changing the communication mode of the communication section 17 through the input section 15.

According to the embodiment, the processor 11 changes the communication mode from the second communication mode to the first communication mode based on the detection of elapse of the predetermined period of time. Thus, the image forming apparatus 1 can prevent the inconvenience that the communication mode is continuously set to the second communication mode. The user can bring the portable terminal 2 close to the communication section 17 after the predetermined period of time elapses to perform the authentication again without requiring the job of changing the communication mode of the communication section 17 through the input section 15.

According to the embodiment, the processor 11 changes the communication mode from the second communication mode to the first communication mode before the elapse of the predetermined period of time based on the detection of the completion of the communication process between the portable terminal 2 and the image forming apparatus 1. As a result, the image forming apparatus 1 can change the communication mode from the second communication mode to the first communication mode without waiting for the elapse of the predetermined period of time. Since the communication process between the portable terminal 2 and the image forming apparatus 1 is completed, no inconvenience is caused for the user. The user can authenticate the portable terminal 2 again by again bringing the portable terminal 2 close to the communication section 17.

According to the embodiment, the processor 11 changes the communication mode from the second communication mode to the first communication mode before the elapse of the predetermined period of time based on the detection of the disconnection of the link between the portable terminal 2 and the image forming apparatus 1. As a result, the image forming apparatus 1 can change the communication mode from the second communication mode to the first communication mode without waiting for the elapse of the predetermined period of time. Since the link between the portable terminal 2 and the image forming apparatus 1 is disconnected, no inconvenience is caused for the user. The user can authenticate the portable terminal 2 again by again bringing the portable terminal 2 close to the communication section 17.

According to the embodiment, the processor 11 changes the communication mode from the second communication mode to the first communication mode before the elapse of the predetermined period of time based on the detection of the logout instruction. As a result, the image forming apparatus 1 can change the communication mode from the second communication mode to the first communication mode without waiting for the elapse of the predetermined period of time. Since the user can input the logout instruction with the input section 15 according to his/her willing, no inconvenience is caused for the user. The user can authenticate the portable terminal 2 again by again bringing the portable terminal 2 close to the communication section 17.

According to the embodiment, the first communication mode is the reader/writer mode, and the second communication mode is either the card emulation mode or the P2P mode. As a result, the image forming apparatus 1 changes the communication mode from the reader/writer mode to the card emulation mode or the P2P mode based on successful authentication of the portable terminal 2. The user can perform the job in the image forming apparatus 1 using the portable terminal 2 without changing the communication mode of the communication section 17 with the input section 15 after the successful authentication.

According to the embodiment, the processor 11 sets either the card emulation mode or the P2P mode as the second communication mode according to the authority. As a result, the image forming apparatus 1 can set the suitable communication mode in response to the authority assigned to the user in the communication section 17 to perform the communication with the portable terminal 2. The user can perform the job in the image forming apparatus 1 according to the authority using the portable terminal 2 without changing the communication mode of the communication section 17 with the input section 15 after successful authentication.

The above-described embodiment is applicable not only to the information processing apparatuses, but also to various image forming apparatus which is an example of the MFP.

## Claims

1. An information processing apparatus (1), comprising:
a communication section (17) configured to communicate with a terminal (2) using a near field wireless communication; and
a processor (11) configured to set a first communication mode to be used for authentication of the terminal as a communication mode of the communication section, and change the communication mode from the first communication mode to a second communication mode different from the first communication mode in response to success in the authentication of the terminal,
**characterized in that**
the first communication mode is a reader/writer mode, and the second communication mode is either a card emulation mode or a P2P mode,
the information processing apparatus further comprises a storage section (14) configured to store data in which identification information used for the authentication is associated with information indicating an authority assigned to a user identified by the identification information, and
the processor sets either the card emulation mode or the P2P mode as the second communication mode according to the authority.

2. The information processing apparatus according to claim 1, wherein
the storage section is further configured to store information indicating a predetermined period of time during which the communication mode is maintained at the second communication mode, wherein
the processor starts to count the predetermined period of time based on successful authentication of the terminal.

3. The information processing apparatus according to claim 2, wherein
the processor changes the communication mode from the second communication mode to the first communication mode based on detection of elapse of the predetermined period of time.

4. The information processing apparatus according to claim 2 or 3, wherein
the processor detects a state of a communication process between the terminal and the information processing apparatus during the counting of the predetermined period of time, and changes the communication mode from the second communication mode to the first communication mode before the predetermined period of time elapses based on the detection of a completion of the communication process between the terminal and the information processing apparatus.

5. The information processing apparatus according to any one of claims 2 to 4, wherein
the processor detects a state of a link between the terminal and the information processing apparatus during the counting of the predetermined period of time, and changes the communication mode from the second communication mode to the first communication mode before the predetermined period of time elapses based on detection of disconnection of the link between the terminal and the information processing apparatus.

6. The information processing apparatus according to any one of claims 2 to 5, wherein
the processor detects presence or absence of a logout instruction during the counting of the predetermined period of time, and changes the communication mode from the second communication mode to the first communication mode before the predetermined period of time elapses based on detection of the logout instruction.

7. A communication mode setting method of an information processing apparatus, comprising following steps performed by a processor of the information processing apparatus:
setting a first communication mode to be used for authentication of a terminal as a communication mode of a communication section of the information processing apparatus for communicating with the terminal using a near filed wireless communication; and
changing the communication mode from the first communication mode to a second communication mode different from the first communication mode in response to success in the authentication of the terminal,
**characterized in that**
the first communication mode is a reader/writer mode, and the second communication mode is either a card emulation mode or a P2P mode, and
the method further comprises steps of:
storing data in a storage section of the information processing apparatus in which identification information used for the authentication is associated with information indicating an authority assigned to a user identified by the identification information, and
setting either the card emulation mode or the P2P mode as the second communication mode according to the authority.

8. The communication mode setting method according to claim 7, further comprising:
storing information in the storage section indicating a predetermined period of time during which the communication mode is maintained at the second communication mode; and
starting to count the predetermined period of time based on successful authentication of the terminal.

9. The communication mode setting method according to claim 8, further comprising:
changing the communication mode from the second communication mode to the first communication mode based on detection of elapse of the predetermined period of time.

10. The communication mode setting method according to claim 8 or 9, further comprising:
detecting a state of a communication process between the terminal and an information processing apparatus during the counting of the predetermined period of time, and changing the communication mode from the second communication mode to the first communication mode before the predetermined period of time elapses based on the detection of a completion of the communication process between the terminal and the information processing apparatus.

11. The communication mode setting method according to any one of claims 8 to 10, further comprising:
detecting a state of a link between the terminal and an information processing apparatus during the counting of the predetermined period of time, and changing the communication mode from the second communication mode to the first communication mode before the predetermined period of time elapses based on detection of disconnection of the link between the terminal and the information processing apparatus.

## Patentansprüche

1. Informationsverarbeitungsvorrichtung (1), umfassend:
einen Kommunikationsabschnitt (17), der dazu konfiguriert ist, mittels einer drahtlosen Nahfeldkommunikation mit einem Endgerät (2) zu kommunizieren, und
einen Prozessor (11), der dazu konfiguriert ist, einen ersten Kommunikationsmodus, der zur Authentifikation des Endgeräts zu verwenden ist, als einen Kommunikationsmodus des Kommunikationsabschnitts einzustellen, und den Kommunikationsmodus in Reaktion auf einen Erfolg bei der Authentifikation des Endgeräts von dem ersten Kommunikationsmodus in einen zweiten Kommunikationsmodus zu ändern, der sich von dem ersten Kommunikationsmodus unterscheidet,
**dadurch gekennzeichnet, dass**
der erste Kommunikationsmodus ein Lese-/Schreibgerätmodus ist und der zweite Kommunikationsmodus entweder ein Kartenemulationsmodus oder ein P2P-Modus ist,
die Informationsverarbeitungsvorrichtung ferner einen Speicherabschnitt (14) umfasst, der dazu konfiguriert ist, Daten zu speichern, in denen Identifikationsinformationen, die zur Authentifikation verwendet werden, mit Informationen assoziiert sind, die eine Berechtigung angeben, die einem Nutzer zugewiesen ist, der durch die Identifikationsinformationen identifiziert ist, und
der Prozessor entweder den Kartenemulationsmodus oder den P2P-Modus als den Kommunikationsmodus gemäß der Berechtigung einstellt.

2. Informationsverarbeitungsvorrichtung nach Anspruch 1, wobei
der Speicherabschnitt ferner dazu konfiguriert ist, Informationen zu speichern, die einen festgelegten Zeitraum angeben, während dem als der Kommunikationsmodus der zweite Kommunikationsmodus aufrechterhalten wird, wobei
der Prozessor den festgelegten Zeitraum basierend auf einer erfolgreichen Authentifikation des Endgeräts zu zählen beginnt.

3. Informationsverarbeitungsvorrichtung nach Anspruch 2, wobei
der Prozessor den Kommunikationsmodus basierend auf dem Erkennen des Verstreichens des festgelegten Zeitraums von dem zweiten Kommunikationsmodus in den ersten Kommunikationsmodus ändert.

4. Informationsverarbeitungsvorrichtung nach Anspruch 2 oder 3, wobei
der Prozessor einen Zustand eines Kommunikationsprozesses zwischen dem Endgerät und der Informationsverarbeitungsvorrichtung während des Zählens des festgelegten Zeitraums erkennt und den Kommunikationsmodus von dem zweiten Kommunikationsmodus in den ersten Kommunikationsmodus ändert, bevor der festgelegte Zeitraum verstreicht, basierend auf dem Erkennen eines Abschlusses des Kommunikationsprozesses zwischen dem Endgerät und der Informationsverarbeitungsvorrichtung.

5. Informationsverarbeitungsvorrichtung nach einem der Ansprüche 2 bis 4, wobei
der Prozessor einen Zustand einer Verbindung zwischen dem Endgerät und der Informationsverarbeitungsvorrichtung während des Zählens des festgelegten Zeitraums erkennt und den Kommunikationsmodus von dem zweiten Kommunikationsmodus in den ersten Kommunikationsmodus ändert, bevor der festgelegte Zeitraum verstreicht, basierend auf dem Erkennen einer Trennung der Verbindung zwischen dem Endgerät und der Informationsverarbeitungsvorrichtung.

6. Informationsverarbeitungsvorrichtung nach einem der Ansprüche 2 bis 5, wobei
der Prozessor die Anwesenheit oder Abwesenheit einer Logout-Anweisung während des Zählens des festgelegten Zeitraums erkennt und den Kommunikationsmodus von dem zweiten Kommunikationsmodus in den ersten Kommunikationsmodus ändert, bevor der festgelegte Zeitraum verstreicht, basierend auf dem Erkennen der Logout-Anweisung.

7. Verfahren zur Einstellung eines Kommunikationsmodus einer Informationsverarbeitungsvorrichtung, die folgenden Schritte umfassend, die von einem Prozessor der Informationsverarbeitungsvorrichtung durchgeführt werden:
Einstellen eines ersten Kommunikationsmodus, der zur Authentifikation des Endgeräts zu verwenden ist, als einen Kommunikationsmodus eines Kommunikationsabschnitts der Informationsverarbeitungsvorrichtung zur Kommunikation mit dem Endgerät mittels einer drahtlosen Nahfeldkommunikation, und
Ändern des Kommunikationsmodus von dem ersten Kommunikationsmodus in einen zweiten Kommunikationsmodus, der sich von dem ersten Kommunikationsmodus unterscheidet, in Reaktion auf einen Erfolg bei der Authentifikation des Endgeräts,
**dadurch gekennzeichnet, dass**
der erste Kommunikationsmodus ein Lese-/Schreibgerätmodus ist und der zweite Kommunikationsmodus entweder ein Kartenemulationsmodus oder ein P2P-Modus ist,
das Verfahren ferner die folgenden Schritte umfasst:
Speichern von Daten in einem Speicherabschnitt der Informationsverarbeitungsvorrichtung, in denen Identifikationsinformationen, die zur Authentifikation verwendet werden, mit Informationen assoziiert sind, die eine Berechtigung angeben, die einem Nutzer zugewiesen ist, der durch die Identifikationsinformationen identifiziert ist, und
Einstellen entweder des Kartenemulationsmodus oder des P2P-Modus als den Kommunikationsmodus gemäß der Berechtigung.

8. Verfahren zur Einstellung eines Kommunikationsmodus nach Anspruch 7, ferner umfassend:
Speichern von Informationen in dem Speicherabschnitt, die einen festgelegten Zeitraum angeben, während dem als der Kommunikationsmodus der zweite Kommunikationsmodus aufrechterhalten wird, und
Beginnen des Zählens des festgelegten Zeitraums basierend auf einer erfolgreichen Authentifikation des Endgeräts.

9. Verfahren zur Einstellung eines Kommunikationsmodus nach Anspruch 8, ferner umfassend:
Ändern des Kommunikationsmodus von dem zweiten Kommunikationsmodus in den ersten Kommunikationsmodus basierend auf dem Erkennen des Verstreichens des festgelegten Zeitraums.

10. Verfahren zur Einstellung eines Kommunikationsmodus nach Anspruch 8 oder 9, ferner umfassend:
Erkennen eines Zustands eines Kommunikationsprozesses zwischen dem Endgerät und einer Informationsverarbeitungsvorrichtung während des Zählens des festgelegten Zeitraums und Ändern des Kommunikationsmodus von dem zweiten Kommunikationsmodus in den ersten Kommunikationsmodus, bevor der festgelegte Zeitraum verstreicht, basierend auf dem Erkennen eines Abschlusses des Kommunikationsprozesses zwischen dem Endgerät und der Informationsverarbeitungsvorrichtung.

11. Verfahren zur Einstellung eines Kommunikationsmodus nach einem der Ansprüche 8 bis 10, ferner umfassend:
Erkennen eines Zustands einer Verbindung zwischen dem Endgerät und der Informationsverarbeitungsvorrichtung während des Zählens des festgelegten Zeitraums und Ändern des Kommunikationsmodus von dem zweiten Kommunikationsmodus in den ersten Kommunikationsmodus, bevor der festgelegte Zeitraum verstreicht, basierend auf dem Erkennen einer Trennung der Verbindung zwischen dem Endgerät und der Informationsverarbeitungsvorrichtung.

## Revendications

1. Appareil de traitement d'informations (1), comprenant :
une section de communication (17) configurée de manière à communiquer avec un terminal (2) en utilisant une communication sans fil en champ proche ; et
un processeur (11) configuré de manière à définir un premier mode de communication à utiliser pour l'authentification du terminal, en tant qu'un mode de communication de la section de communication, et à modifier le mode de communication, du premier mode de communication en un second mode de communication différent du premier mode de communication, en réponse au succès de l'authentification du terminal ;
**caractérisé en ce que** :
le premier mode de communication est un mode de lecture/écriture, et le second mode de communication est soit un mode d'émulation de carte, soit un mode pair à pair, P2P ;
l'appareil de traitement d'informations comprend en outre une section de stockage (14) configurée de manière à stocker des données dans lesquelles des informations d'identification utilisées pour l'authentification sont associées à des informations indiquant une autorité affectée à un utilisateur identifié par les informations d'identification ; et
le processeur définit soit le mode d'émulation de carte, soit le mode P2P, en tant que le second mode de communication, selon l'autorité.

2. Appareil de traitement d'informations selon la revendication 1, dans lequel :
la section de stockage est en outre configurée de manière à stocker des informations indiquant une période de temps prédéterminée pendant laquelle le mode de communication est maintenu en tant que le second mode de communication, dans lequel
le processeur commence à compter la période de temps prédéterminée sur la base d'une authentification réussie du terminal.

3. Appareil de traitement d'informations selon la revendication 2, dans lequel :
le processeur modifie le mode de communication, du second mode de communication au premier mode de communication, sur la base d'une détection de l'écoulement de la période de temps prédéterminée.

4. Appareil de traitement d'informations selon la revendication 2 ou 3, dans lequel :
le processeur détecte un état d'un processus de communication entre le terminal et l'appareil de traitement d'informations, pendant le comptage de la période de temps prédéterminée, et modifie le mode de communication, du second mode de communication au premier mode de communication, avant que la période de temps prédéterminée ne s'écoule, sur la base de la détection d'un achèvement du processus de communication entre le terminal et l'appareil de traitement d'informations.

5. Appareil de traitement d'informations selon l'une quelconque des revendications 2 à 4, dans lequel :
le processeur détecte un état d'une liaison entre le terminal et l'appareil de traitement d'informations pendant le comptage de la période de temps prédéterminée, et modifie le mode de communication, du second mode de communication au premier mode de communication, avant que la période de temps prédéterminée ne s'écoule, sur la base de la détection d'une déconnexion de la liaison entre le terminal et l'appareil de traitement d'informations.

6. Appareil de traitement d'informations selon l'une quelconque des revendications 2 à 5, dans lequel :
le processeur détecte la présence ou l'absence d'une instruction de déconnexion pendant le comptage de la période de temps prédéterminée, et modifie le mode de communication, du second mode de communication au premier mode de communication, avant que la période de temps prédéterminée ne s'écoule, sur la base d'une détection de l'instruction de déconnexion.

7. Procédé de définition de mode de communication d'un appareil de traitement d'informations, comprenant les étapes ci-dessous, mises en œuvre par un processeur de l'appareil de traitement d'informations, consistant à :
définir un premier mode de communication à utiliser pour l'authentification d'un terminal, en tant qu'un mode de communication d'une section de communication de l'appareil de traitement d'informations pour communiquer avec le terminal en utilisant une communication sans fil en champ proche ; et
modifier le mode de communication, du premier mode de communication en un second mode de communication différent du premier mode de communication, en réponse au succès de l'authentification du terminal ;
**caractérisé en ce que** :
le premier mode de communication est un mode de lecture/écriture, et le second mode de communication est soit un mode d'émulation de carte, soit un mode P2P ; et
le procédé comprend en outre les étapes ci-dessous consistant à :
stocker des données, dans une section de stockage de l'appareil de traitement d'informations, dans lesquelles des informations d'identification utilisées pour l'authentification sont associées à des informations indiquant une autorité affectée à un utilisateur identifié par les informations d'identification ; et
définir soit le mode d'émulation de carte, soit le mode P2P, en tant que le second mode de communication, selon l'autorité.

8. Procédé de définition de mode de communication selon la revendication 7, comprenant en outre les étapes ci-dessous consistant à :
stocker des informations, dans la section de stockage, indiquant une période de temps prédéterminée pendant laquelle le mode de communication est maintenu en tant que le second mode de communication ; et
commencer à compter la période de temps prédéterminée sur la base d'une authentification réussie du terminal.

9. Procédé de définition de mode de communication selon la revendication 8, comprenant en outre l'étape ci-dessous consistant à :
modifier le mode de communication, du second mode de communication au premier mode de communication, sur la base d'une détection de l'écoulement de la période de temps prédéterminée.

10. Procédé de définition de mode de communication selon la revendication 8 ou 9, comprenant en outre les étapes ci-dessous consistant à :
détecter un état d'un processus de communication entre le terminal et un appareil de traitement d'informations pendant le comptage de la période de temps prédéterminée, et modifier le mode de communication, du second mode de communication au premier mode de communication, avant que la période de temps prédéterminée ne s'écoule, sur la base de la détection d'un achèvement du processus de communication entre le terminal et l'appareil de traitement d'informations.

11. Procédé de définition de mode de communication selon l'une quelconque des revendications 8 à 10, comprenant en outre les étapes ci-dessous consistant à :
détecter un état d'une liaison entre le terminal et un appareil de traitement d'informations pendant le comptage de la période de temps prédéterminée, et modifier le mode de communication, du second mode de communication au premier mode de communication, avant que la période de temps prédéterminée ne s'écoule, sur la base de la détection d'une déconnexion de la liaison entre le terminal et l'appareil de traitement d'informations.
